# FASCICULE DE BREVET EUROPEEN

(11) **EP 2 986 436 B1**
(45) Date de publication et mention de la délivrance du brevet: **01.02.2017**
(21) Numéro de dépôt: 14722693.0
(22) Date de dépôt: 08.04.2014
(51) Int. Cl.: B29C 49/48, B29C 49/06, B29C 49/12, B29L 31/00, B29K 667/00

(54) **MOULE À FOND MOBILE ET PLAN DE JOINT HORIZONTAL**
FORM MIT BEWEGLICHEM BODEN UND HORIZONTALER ANSCHLUSSFLÄCHE
MOULD WITH A MOVABLE BOTTOM AND HORIZONTAL JOINT PLANE

(30) Priorité: 15.04.2013 FR 1353406
(43) Date de publication de la demande: 24.02.2016
(73) Titulaire: Sidel Participations, 76930 Octeville Sur Mer (FR)
(72) Inventeur: GUITON, Camille, 76930 Octeville Sur Mer (FR)
(74) Mandataire: Siloret, Patrick
(86) Numéro de dépôt international: PCT/FR2014/050833
(87) Numéro de publication internationale: WO 2014/170577

(56) Documents cités:
- WO-A1-99/52701
- JP-A- S5 973 925
- JP-A- 2001 088 202
- US-A- 5 122 327
- US-A- 5 454 707

## Description

L'invention se rapporte à la fabrication des récipients, tels que bouteilles ou pots, obtenus par formage, et plus précisément par soufflage ou étirage soufflage, à partir d'ébauches en matière thermoplastique.

Pour fabriquer un récipient suivant la technique du soufflage, on commence par chauffer une ébauche (qu'il s'agisse d'une préforme ou d'un récipient intermédiaire ayant subi une première opération de soufflage à partir d'une préforme) à une température supérieure à la température de transition vitreuse de la matière constitutive de l'ébauche. On introduit ensuite l'ébauche dans un moule, puis on effectue le soufflage de l'ébauche en y injectant un gaz (tel que de l'air) sous haute pression (généralement supérieure à 25 bars).

La technique de l'étirage soufflage consiste, outre le soufflage, à étirer l'ébauche au moyen d'une tige coulissante, afin de minimiser le désaxement du récipient et d'uniformiser autant que possible la répartition de la matière.

Un récipient comporte une paroi latérale (également dénommée corps), un col qui s'étend à partir d'une extrémité supérieure du corps, et un fond qui s'étend à partir d'une extrémité inférieure du corps, à l'opposé du col. Le fond du récipient définit une assise, généralement à la jonction avec le corps, et par laquelle le récipient peut reposer sur une surface plane (telle qu'une table).

Le moule comprend une paroi définissant une cavité destinée à conférer sa forme au corps du récipient. Cette cavité est fermée, à une extrémité inférieure, par un fond de moule destiné à conférer sa forme au fond du récipient.

L'un des buts principaux visés aujourd'hui par les fabricants est la diminution de la quantité de matière utilisée, ce qui se traduit par une réduction du poids des récipients, quelle que soit la destination de ceux-ci (liquides plats, liquides gazéifiés, liquides introduits chauds dans les récipients). En contrepartie de cet allègement des récipients, on tente d'accroître leur rigidité au moyen d'artefacts liés soit au procédé de fabrication, soit au design, car la rigidité structurelle liée à la seule biorientation (orientation moléculaire axiale et radiale par rapport à l'axe central longitudinal du récipient) apparaît insuffisante.

Il arrive même que certains cahiers des charges (notamment pour des applications de remplissage à chaud ou HR - heat resistant) préconisent dans le même temps la réduction du poids et l'accroissement de la rigidité structurelle du récipient, ce qui accroît les difficultés de conception de celui-ci. Dans les applications HR, la rigidité structurelle du récipient peut être accrue par voie thermique au moyen d'une thermofixation (en anglais heat set) de la matière, consistant à maintenir le récipient en contact avec la paroi chauffée du moule, ce qui accroît le taux de cristallinité de la matière.

S'agissant plus particulièrement du fond du récipient, sa rigidité structurelle peut en outre être accrue (ou contrôlée) par voie mécanique au moyen d'un surétirage local de la matière, au moyen d'un moule muni d'une paroi fixe à l'empreinte du corps du récipient, et d'un fond de moule à l'empreinte du fond du récipient, ce fond de moule étant monté mobile par rapport à la paroi. Le récipient est d'abord soufflé au-delà de sa forme finale, dans une position basse du fond de moule, puis le fond de moule est déplacé vers une position haute correspondant à la forme finale du récipient.

Cette technique, dénommée "boxage", illustrée dans la demande de brevet français FR 2 938 464 (SIDEL) ou son équivalent américain US 2012/031916, permet d'améliorer la tenue mécanique du fond du récipient, notamment au niveau de l'assise.

Dans un tel moule, un interstice est prévu entre le fond de moule, monté sur un vérin de guidage, et la paroi pour maintenir entre ces deux pièces un jeu fonctionnel ayant une double fonction : d'une part, permettre le déplacement sans coincement du fond de moule par rapport à la paroi ; d'autre part, former un évent de décompression permettant l'évacuation de l'air piégé entre le moule et le récipient au cours du soufflage.

Cette technique donne satisfaction mais demeure perfectible.

En effet, le jeu fonctionnel entre le moule et le fond de moule ne peut être inférieur à la précision de guidage du vérin, qui est de l'ordre de quelques dixièmes de millimètres pour une course de l'ordre de 20 à 30 mm.

En d'autres termes, ce jeu fonctionnel est du même ordre de grandeur que l'épaisseur de matière du récipient final. La matière a par conséquent tendance, lors du soufflage, à fluer dans l'interstice lorsque le fond de moule est en position basse. La matière ainsi pincée forme, lorsque le fond de moule est déplacé vers sa position haute, un mince bourrelet de matière qui persiste sur le récipient final. Ce bourrelet, formant une saillie sur l'assise du récipient, nuit à la stabilité de celui-ci.

Une première solution peut consister à ébavurer le récipient, par découpe ou par abrasion. Mais cette solution n'est pas réaliste à l'échelle industrielle, compte tenu des cadences de production (plusieurs dizaines de milliers de récipients par heure et par machine de soufflage).

Une deuxième solution peut consister à adjoindre au vérin un dispositif de guidage de précision (par exemple à billes), de façon à réduire le jeu fonctionnel entre le fond de moule et la paroi du moule. Mais cette solution se heurte à des difficultés pratiques, car l'encombrement du dispositif de guidage nécessiterait de modifier en profondeur l'architecture du moule, alors même que la place est comptée tout autour de celui-ci, compte tenu notamment de la présence de canalisations et branchements nécessaires à la circulation de fluides de régulation de température (chauffe et/ou refroidissement) dans la paroi du moule.

Une troisième solution peut consister à anticiper la commande de remontée du fond de moule, afin que la matière n'ait pas le temps de s'intercaler entre la paroi du moule et le fond de moule. Dans ces conditions toutefois, la matière destinée au fond du récipient est insuffisamment étirée, et l'assise se révèle mal formée, ce qui réduit l'intérêt du boxage.

En outre, la réduction du jeu fonctionnel entre le fond de moule et la paroi du moule est de nature à entraver l'évacuation de l'air présent dans le moule, avec un risque de malformation du récipient (à temps de cycle égal) ou de réduction du temps de cycle (à qualité du récipient égale).

Un objectif de l'invention est de proposer une technique de fabrication de récipients, applicable à tous types de récipients, ayant une assise correctement formée et présentant à la fois une bonne rigidité et une bonne stabilité.

A cet effet, il est proposé, en premier lieu, un moule pour la fabrication, à partir d'une ébauche, d'un récipient ayant un corps et un fond muni d'une assise périphérique qui s'étend sensiblement perpendiculairement au corps à partir d'une extrémité inférieure de celui-ci, ce moule comprenant :
- une paroi ayant une surface interne déterminant l'empreinte du corps du récipient et délimitant une cavité, cette surface interne se terminant, à une extrémité inférieure, par une ouverture, la paroi définissant, au-delà de la cavité, une réserve en creux débouchant dans la cavité par l'ouverture ;
- un fond de moule mobile par rapport à la paroi entre une position sortie, dans laquelle le fond de moule est écarté de l'ouverture, et une position rentrée dans laquelle le fond de moule est emboîté dans la réserve, le fond présentant une surface supérieure définissant une surface d'assise déterminant l'empreinte de l'assise du récipient et qui s'étend à l'aplomb de l'ouverture.

Dans ce moule :
- la paroi présente un lamage qui délimite supérieurement la réserve en creux et qui s'étend au droit et autour de l'ouverture, sensiblement perpendiculairement à l'axe central ;
- la surface supérieure du fond de moule définit une face périphérique qui s'étend dans le prolongement de la surface d'assise autour de celle-ci, à l'aplomb du lamage.

Une telle configuration du moule permet de réaliser un plan de joint sensiblement horizontal entre la paroi du moule et le fond de moule. Le récipient soufflé dans un tel moule est dépourvu de saillie axiale sur son assise, au bénéfice de sa stabilité.

Diverses caractéristiques supplémentaires peuvent être prévues, seules ou en combinaison :
- la paroi du moule présente une lèvre périphérique qui s'étend intérieurement en saillie et présente une arête qui définit l'ouverture ;
- la lèvre forme, en section transversale, un angle aigu au niveau de l'arête ;
- la réserve est délimitée latéralement par un alésage qui s'étend axialement dans le prolongement du lamage ;
- un interstice persiste entre le lamage et la face périphérique en position rentrée du fond de moule ;
- la réserve présente un alésage qui s'étend axialement dans le prolongement du lamage, et le fond de moule est pourvu d'une jupe qui s'étend axialement du côté opposé à la surface supérieure, cette jupe venant se loger dans l'alésage en position rentrée du fond de moule ;
- un jeu de fonctionnement est ménagé entre la jupe et l'alésage.

Il est proposé, en second lieu, un procédé de fabrication d'un récipient à partir d'une ébauche dans lequel ce procédé comprend les opérations consistant à :
- introduire l'ébauche dans un moule tel que présenté ci-dessus, le fond de moule étant en position sortie,
- former le récipient en injectant dans l'ébauche un fluide sous pression,
- au cours du formage, déplacer le fond de moule vers sa position rentrée.

D'autres objets et avantages de l'invention apparaîtront à la lumière de la description faite ci-après en référence aux dessins annexés dans lesquels :
- la figure 1 est une section d'une unité de formage comprenant un moule équipé d'une paroi et d'un fond de moule mobile, représenté dans une position basse correspondant au début d'un cycle de formage ;
- la figure 2 est une vue similaire à la figure 1, dans laquelle l'unité de formage est représentée avec le fond de moule en position haute, à la fin du cycle de formage ;
- la figure 3 est une vue de détail du moule, montrant le fond de moule en position haute, le récipient étant absent pour des raisons de clarté ;
- la figure 4 est une vue similaire à la figure 3, montrant le fond de moule en position haute avec le récipient formé.

Sur les figures est partiellement représentée une unité **1** de formage d'un récipient **2** par étirage soufflage à partir d'une ébauche **3** - en l'espèce une préforme - en matière plastique (tel que PET).

Le récipient **2** à former présente un corps **4** qui s'étend suivant un axe X principal, un col **5** qui prolonge le corps **4** à une extrémité supérieure de celui-ci, et un fond **6** qui ferme le corps **4** à une extrémité **7** inférieure de celui-ci, opposée au col **5.** Le fond **6** du récipient présente une assise **8** périphérique définissant un plan de pose sensiblement perpendiculaire à l'axe X du récipient **2** et par lequel le récipient **2** est destiné à reposer sur une surface plane telle qu'une table. Le fond **6** présente une voûte **9** centrale qui prolonge l'assise **8** vers l'axe X du récipient **2** et s'étend en saillie vers l'intérieur de celui-ci.

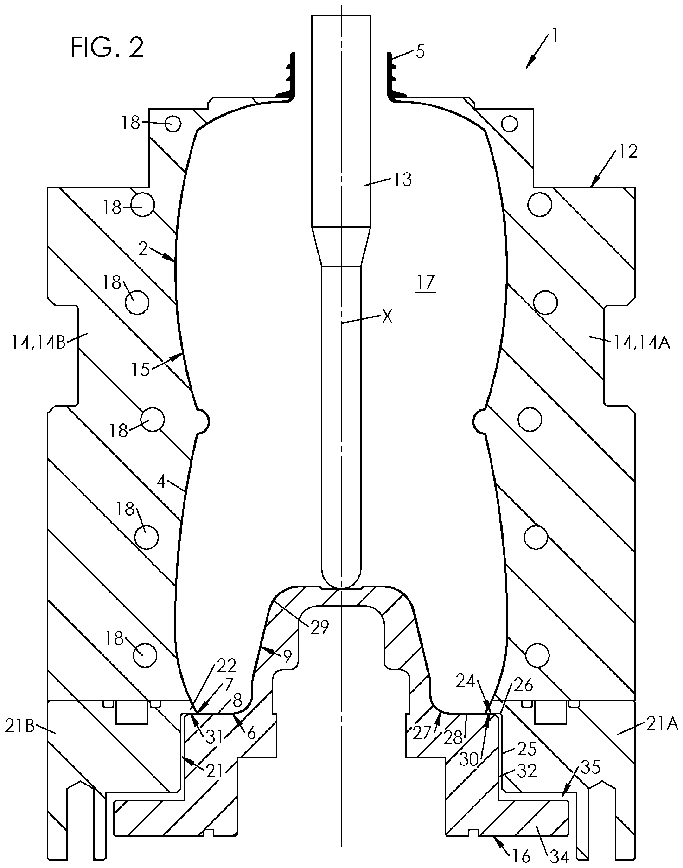

Comme on le voit sur la figure 2, le corps **4** du récipient **2** est cintré à son extrémité **7** inférieure, au voisinage de sa jonction avec le fond **6.** Cette forme est toutefois illustrative, et le corps **4** pourrait être droit à son extrémité **7** inférieure.

Chaque préforme **3** comprend un fût **10** sensiblement cylindrique, destiné à former le corps **4** du récipient **2,** un col **5** qui demeure inchangé sur le récipient **2,** ainsi qu'un dôme **11** hémisphérique qui ferme le fût **10** à l'opposé du col **5** et est destiné à former le fond **6** du récipient **2.**

L'unité **1** de formage comprend un moule **12,** une tige **13** d'étirage, ainsi que des moyens de soufflage (non représentés) incluant notamment une tuyère, des sources de gaz sous pression et des électrovannes qui, de manière classique, sont par exemple rassemblées dans un bloc surmontant la tuyère.

Le moule **12** est par exemple du type portefeuille et comprend deux demi-moules articulés autour d'une charnière, ces deux demi-moules s'ouvrant pour permettre, au début du cycle de formage, l'introduction d'une préforme **3** préchauffée et, à la fin du cycle, l'évacuation du récipient **2** formé.

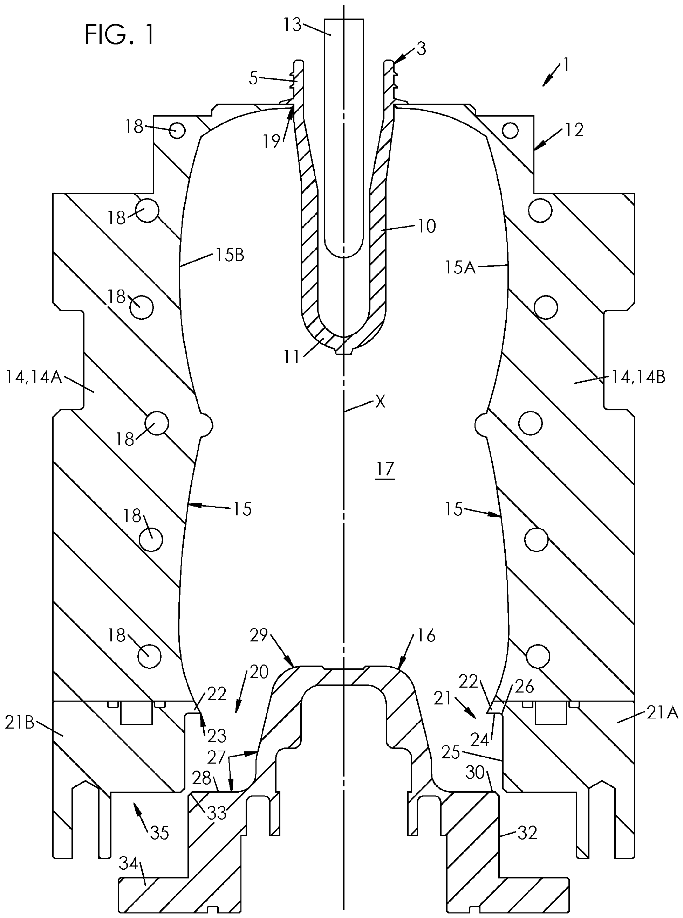

Comme cela est visible sur les figures, le moule **12** comprend une paroi **14** latérale, constituée de préférence, selon un principe connu, de deux demi-moules **14A, 14B,** rapprochables ou écartables mutuellement, comprenant chacun une surface **15A, 15B** usinée. Lorsque les demi-moules **14A, 14B** sont au contact l'un de l'autre, ces surfaces **15A, 15B** forment conjointement une surface **15** interne déterminant l'empreinte du corps **4** du récipient **2.** Le moule **12** comprend encore un fond **16** de moule déterminant l'empreinte du fond **6** du récipient **2.** La surface **15** interne délimite une cavité **17** dans laquelle est introduite la préforme **3** et dans laquelle se déroule le formage. Comme on le voit sur les figures 1 et 2, la paroi **14,** respectivement chaque demi-moule **14A, 14B**, est percée de canaux **18** pour la circulation de fluides de régulation de température (chauffe et/ou refroidissement) de la paroi **14.**

La surface **15** interne s'étend autour d'un axe central confondu avec l'axe X du récipient **2** à former. La surface **15** interne se termine, à une extrémité supérieure, par un trou **19** au travers duquel s'étend le fût **10** de la préforme **3** et, à une extrémité inférieure opposée, par une ouverture **20.**

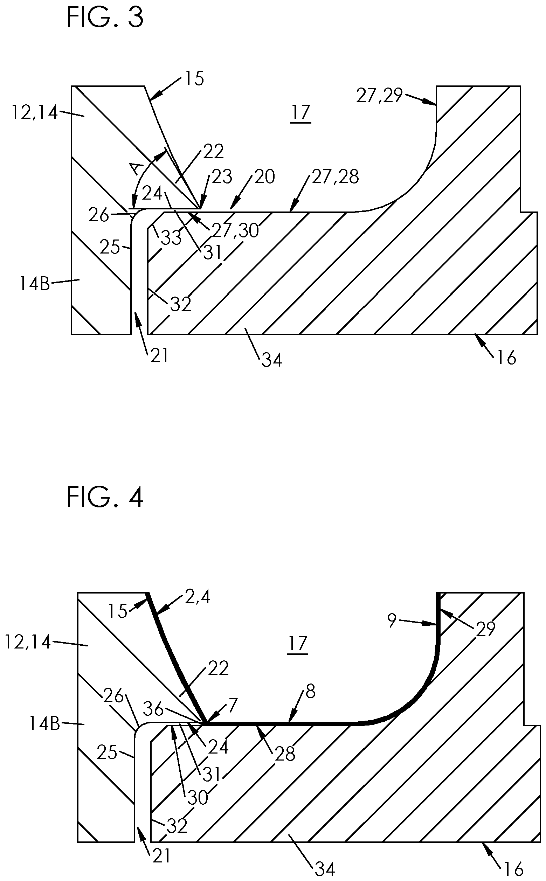

La paroi **14** latérale définit, au-delà de la cavité **17,** une réserve **21** en creux complémentaire du fond **16** de moule et dans laquelle celui-ci vient s'emboîter. Selon le mode de réalisation préféré, illustré sur les figures, la réserve **21** est au moins partiellement formée à l'aide d'usinages réalisés dans des pièces **21A, 21B** rapportées respectivement sur chacun des demi-moules **14A, 14B.** Dans une variante, la réserve **21** est réalisée par usinage des demi-moules **14A, 14B**, qui ont alors une plus grande extension verticale, comme visible sur les figures 3 et 4.

La réserve **21** débouche dans la cavité **17** par l'ouverture **20.** Comme on le voit sur les figures, et plus précisément sur les figures 2 et 3, la paroi **14** du moule **12** présente une lèvre **22** périphérique qui s'étend intérieurement en saillie et présente une arête **23** qui définit l'ouverture **20** et correspond, sur le récipient **2,** à l'extrémité **7** inférieure du corps **4.** La lèvre **22** forme, en section transversale, un angle A aigu au niveau de l'arête **23,** ce qui traduit le caractère cintré du corps **4** du récipient **2** au voisinage du fond **6.** L'angle A est supérieur ou égal à 30°, et de préférence supérieur ou égal à 60°. Selon un mode préféré de réalisation illustré sur les figures, l'angle A est de l'ordre de 65°.

Comme cela est visible sur la figure 1, la réserve **21** est délimitée supérieurement - c'est-à-dire du côté de la cavité **17 -** par un lamage **24** formé par une face transversale périphérique tournée à l'opposé de la cavité **17.** Ce lamage **24** s'étend au droit et autour de l'ouverture **20,** sensiblement dans un plan horizontal (c'est-à-dire perpendiculaire à l'axe X).

Selon un mode particulier de réalisation illustré sur les figures, la réserve **21** présente un alésage **25** qui s'étend axialement dans le prolongement du lamage **24.** Selon un mode particulier de réalisation illustré sur les figures, et plus particulièrement visible sur les figures 3 et 4, le moule **12** présente un congé **26** de raccordement à la jonction entre le lamage **24** et l'alésage **25.**

Le fond **16** de moule est monté déplaçable axialement par rapport à la paroi **14** entre une position sortie, dans laquelle le fond **16** de moule est écarté de l'ouverture **20,** et une position rentrée, dans laquelle le fond **16** de moule est emboîté dans la réserve **21** en obturant l'ouverture **20.** La mobilité du fond **16** de moule vise à permettre, au cours du formage, un surétirage du fond **6** du récipient **2,** au cours d'une opération appelée boxage lors de laquelle le fond **16** de moule, initialement en position sortie, est déplacé vers sa position rentrée. A cet effet, le fond **16** de moule est par exemple monté sur un vérin pneumatique ou hydraulique (non représenté).

Dans la configuration illustrée sur les figures - donnée à titre d'exemple illustratif - où le récipient **2** est orienté col **5** en haut, la position sortie du fond **16** de moule correspond à une position basse, et sa position rentrée à une position haute.

Le fond **16** de moule présente une surface **27** supérieure qui, en position haute du fond **16** de moule, ferme la cavité **17** en obturant l'ouverture, complétant ainsi l'empreinte contre laquelle est appliquée la matière lors du formage du récipient **2.**

La surface **27** supérieure définit, en premier lieu, une surface **28** d'assise à l'empreinte de l'assise **8** du récipient **2.** La surface **28** d'assise s'étend de manière périphérique autour de l'axe X et perpendiculairement à celui-ci (c'est-à-dire horizontalement), à l'aplomb de l'ouverture **20,** à l'intérieur du périmètre délimité par celle-ci.

La surface **27** supérieure définit, en deuxième lieu, un pion **29** central à l'empreinte de la voûte **9.** Ce pion **29** s'étend en saillie axiale à partir de la surface **28** d'assise, intérieurement à celle-ci. En position haute du fond **16** de moule, le pion **29** fait complètement saillie au-delà de l'ouverture **20** vers l'intérieur de la cavité **17.**

La surface **27** supérieure définit, en troisième lieu, une face **30** périphérique qui s'étend radialement dans le prolongement de la surface **28** d'assise, extérieurement à celle-ci. La face **30** périphérique s'étend ainsi à l'aplomb du lamage **24,** extérieurement au périmètre délimité par l'ouverture **20.** La face **30** périphérique est parallèle au lamage **24,** et s'étend horizontalement, c'est-à-dire dans un plan perpendiculaire à l'axe X central.

La face **30** périphérique et le lamage **24** définissent conjointement, lorsque le fond **16** de moule est en position haute (figures 2 à 4), un plan **31** de joint périphérique. Compte tenu de l'orientation du lamage **24** et de la face **30** périphérique, le plan **31** de joint s'étend horizontalement, sensiblement perpendiculairement à l'axe X.

En position haute du fond **16** de moule, un contact n'est pas nécessairement réalisé entre le fond **16** de moule et la paroi **14** du moule **12,** au niveau du plan **31** de joint. Selon un mode préféré de réalisation, il persiste en effet, en position haute du fond **16** de moule, un interstice au niveau du plan **31** de joint. Cet interstice remplit une fonction d'évent, visant à permettre l'évacuation de l'air piégé entre le récipient **2** et le moule **12** à la fin du formage. Cela permet de former correctement l'assise **8,** notamment à sa jonction avec l'extrémité **7** inférieure du corps **4.** A défaut, il pourrait persister une bulle (ou des bulles) d'air à cette jonction, ce qui déformerait l'assise 8 et, à tout le moins, pourrait en réduire la largeur au détriment de la stabilité du récipient **2.**

L'interstice défini au niveau du plan **31** de joint en position haute du fond **16** de moule est de préférence de l'ordre du dixième de millimètre. Cette valeur est inférieure à l'épaisseur de matière du récipient **2** en fin de soufflage, ce qui évite (ou limite) à tout le moins le fluage de la matière à la fin du soufflage, lorsque le fond **16** de moule est en position haute.

Ainsi qu'illustré sur les figures, le fond **16** de moule est pourvu d'une jupe **32** cylindrique qui s'étend axialement du côté opposé à la surface **27** supérieure pour venir se loger dans l'alésage **25** en position haute du fond **16** de moule. La jupe **32** présente un diamètre extérieur inférieur au diamètre intérieur de l'alésage **25,** de sorte que soit ménagé entre la jupe **32** et l'alésage **25** un jeu de fonctionnement de l'ordre de quelques dixièmes de millimètres.

Un chanfrein **33** est, en outre, avantageusement prévu à la jonction entre la jupe **32** et la surface **27** supérieure. Comme illustré sur la figure 3, en position haute du fond **16** de moule, le chanfrein **33** vient se positionner en regard du congé **26** de raccordement. Il en résulte une meilleure canalisation du flux d'air évacué de la cavité **17** au niveau du fond **16** de moule, lors du soufflage du récipient **2.**

Selon un mode de réalisation illustré sur les figures, le fond **16** de moule comprend en outre une collerette **34** qui s'étend radialement en saillie à partir de la jupe **32,** à une extrémité inférieure du fond **16** de moule opposée à la surface **27** supérieure. En position haute du fond **16** de moule, cette collerette **34** vient se loger dans un évidement **35** complémentaire formé dans la paroi **14** latérale au-delà de l'alésage **25.** La collerette **34** et l'évidement **35** forment conjointement une chicane permettant de dévier radialement le flux d'air évacué de la cavité **17** lors du formage du récipient **2,** tout en réduisant simultanément la pression de l'air au bénéfice d'une meilleure évacuation de celui-ci.

Le moule **12** décrit ci-dessus présente les avantages suivants.

Premièrement, l'horizontalité du plan **31** de joint entre le fond **16** de moule et la paroi **14** du moule évite la formation, sur le fond **6** du récipient **2,** d'une bavure en saillie axiale qui nuirait à la stabilité du récipient **2.** Il se peut néanmoins qu'une bavure **36** existe sous forme d'une collerette ou d'un ou plusieurs appendices s'étendant dans un plan horizontal, dans le prolongement radial de l'assise **8.** Une telle bavure **36** radiale ne nuit toutefois pas à la stabilité du récipient **2.**

Deuxièmement, dans l'hypothèse où une telle bavure **36** existe, son épaisseur (égale à l'épaisseur du plan **31** de joint) est suffisamment faible pour être à peu près imperceptible par l'utilisateur final du récipient **2,** au bénéfice de la qualité perçue de celui-ci.

Troisièmement, l'horizontalité du plan **31** de joint permet de minimiser l'épaisseur de l'éventuelle bavure **36** formée dans celui-ci par la matière fluant hors de la cavité **17** à la fin du formage du récipient **2.** La quantité de matière prélevée sur l'assise **8** (que l'on peut donc considérer comme gaspillée) est par conséquent minimale, au bénéfice de la bonne conformation et de la rigidité structurelle de l'assise **8.**

Quatrièmement, grâce à la séparation entre, d'une part le plan **31** de joint, localisé au voisinage de l'ouverture **20,** et d'autre part le jeu de fonctionnement ménagé entre l'alésage **25** et la jupe **32,** il devient inutile de minimiser ce jeu de fonctionnement. L'on peut donc choisir un vérin de guidage moins précis mais plus robuste, au bénéfice d'une meilleure fiabilité du moule **12.** Il en résulte également une meilleure évacuation de l'air présent dans la cavité, grâce à la détente que subit l'air entre la paroi **14** du moule **12** et le fond **16** de moule.

La fabrication du récipient **2** est réalisée comme suit.

La tige **13** étant rétractée, on commence par introduire la préforme **3** préchauffée dans le moule **12** ouvert. Le fond **16** de moule est alors en position basse. Le moule **12** est refermé puis la tige **13** est déplacée en direction du fond **16** de moule jusqu'à venir y plaquer la matière de la préforme **3** ainsi étirée, cependant qu'un gaz (typiquement de l'air) sous une pression de présoufflage (de l'ordre de 5 à 7 bars) est injecté dans la préforme **3.**

Lorsque la tige **13** atteint le fond **16** de moule en y plaquant la matière, le fond **16** de moule se trouve toujours dans sa position basse. La pression de présoufflage n'est pas suffisante pour plaquer la matière intimement contre la paroi **14** du moule **12 ;** il est nécessaire pour cela d'injecter dans le récipient **2** en formation un gaz (typiquement de l'air) à une pression de soufflage supérieure à la pression de présoufflage (en pratique la pression de soufflage est de l'ordre de 20 à 30 bars).

La remontée du fond **16** de moule est de préférence initiée pendant l'opération de soufflage, de manière à conférer à la matière du fond **6** un léger surétirage favorable à l'orientation des molécules et à la prise d'empreinte de la matière sur la surface **27** supérieure du fond **16** de moule.

Le caractère aigu de l'angle A formé par la lèvre **22** au niveau de son arête **23** limite le fluage radial de la matière au niveau du lamage **24,** la matière ayant plutôt tendance à subir une expansion axiale en demeurant à l'intérieur du périmètre délimité par l'ouverture **20.** Dans l'hypothèse où de la matière flue à l'extérieur du périmètre de l'ouverture **20,** cette matière est en faible quantité et forme au niveau du plan **31** de joint, en position haute du fond **16** de moule, une bavure **36** de faible épaisseur et de faible extension radiale, comme illustré sur la figure 4.

Lorsqu'on souhaite réaliser une thermofixation, la pression de soufflage est maintenue temporairement dans le récipient **2** ainsi formé pour maintenir celui-ci en contact avec la paroi **14** chauffée, de façon à assurer une thermofixation de la matière par accroissement de sa cristallinité, et ainsi accroître la résistance mécanique du récipient **2** lors de son remplissage à chaud.

La tige **13,** maintenue en contact (via la matière du fond **6** du récipient **2)** contre le fond **16** de moule pendant la remontée de celui-ci, est ensuite retirée, l'intérieur du récipient **2** est mis à l'air libre, et le récipient **2** est évacué avant que le cycle ne soit répété pour le récipient suivant.

## Revendications

1. Moule **(12)** pour la fabrication, à partir d'une ébauche **(3),** d'un récipient **(2)** ayant un corps **(4)** et un fond **(6)** muni d'une assise **(8)** périphérique qui s'étend sensiblement perpendiculairement au corps **(4)** à partir d'une extrémité **(7)** inférieure de celui-ci, ce moule **(12)** comprenant :
- une paroi **(14)** ayant une surface **(15)** interne déterminant l'empreinte du corps **(4)** du récipient **(2)** et délimitant une cavité **(17),** cette surface **(15)** interne se terminant, à une extrémité inférieure, par une ouverture **(20),** la paroi **(14)** définissant, au-delà de la cavité **(17),** une réserve **(21)** en creux débouchant dans la cavité **(17)** par l'ouverture **(20) ;**
- un fond **(16)** de moule mobile par rapport à la paroi **(14)** entre une position sortie, dans laquelle le fond **(16)** de moule est écarté de l'ouverture **(20),** et une position rentrée dans laquelle le fond **(16)** de moule est emboîté dans la réserve **(21),** le fond présentant une surface **(27)** supérieure définissant une surface **(28)** d'assise à l'empreinte de l'assise **(8)** du récipient **(2)** et qui s'étend à l'aplomb de l'ouverture **(20),**
ce moule étant **caractérisé en ce que** :
- la paroi **(14)** présente un lamage **(24)** qui délimite supérieurement la réserve **(21)** en creux et qui s'étend au droit et autour de l'ouverture **(20),** sensiblement perpendiculairement à l'axe (X) central ;
- la surface **(27)** supérieure du fond **(16)** de moule définit une face **(30)** périphérique qui s'étend dans le prolongement de la surface **(28)** d'assise autour de celle-ci, à l'aplomb du lamage **(24).**

2. Moule **(12)** selon la revendication **1, caractérisé en ce que** la paroi **(14)** du moule **(12)** présente une lèvre **(22)** périphérique qui s'étend intérieurement en saillie et présente une arête **(23)** qui définit l'ouverture **(20).**

3. Moule **(12)** selon la revendication **2, caractérisé en ce que** la lèvre **(22)** forme, en section transversale, un angle A aigu au niveau de l'arête (**23**).

4. Moule **(12)** selon l'une quelconque des revendications précédentes **caractérisé en ce que** la réserve **(21)** est délimitée latéralement par un alésage **(25)** qui s'étend axialement dans le prolongement du lamage **(24).**

5. Moule **(12)** selon l'une quelconque des revendications précédentes, **caractérisé en ce que** un interstice persiste entre le lamage **(24)** et la face **(30)** périphérique en position rentrée du fond **(16)** de moule.

6. Moule **(12)** selon l'une quelconque des revendications précédentes, **caractérisé en ce que** la réserve **(21)** présente un alésage **(25)** qui s'étend axialement dans le prolongement du lamage **(24),** et le fond **(16)** de moule est pourvu d'une jupe **(32)** qui s'étend axialement du côté opposé à la surface **(27)** supérieure, cette jupe **(32)** venant se loger dans l'alésage **(25)** en position rentrée du fond **(16)** de moule.

7. Moule **(12)** selon la revendication **6, caractérisé en ce que** un jeu de fonctionnement est ménagé entre la jupe **(32)** et l'alésage **(25).**

8. Procédé de fabrication d'un récipient **(2)** à partir d'une ébauche **(3), caractérisé en ce qu'**il comprend les opérations consistant à :
- introduire l'ébauche dans un moule **(12)** selon l'une des revendications précédentes, le fond **(16)** de moule étant en position sortie,
- souffler le récipient en injectant dans l'ébauche **(3)** un gaz sous pression,
- au cours du soufflage, déplacer le fond **(16)** de moule vers sa position rentrée.

## Patentansprüche

1. Formwerkzeug (12) zur Herstellung, ausgehend von einem Rohling (3), eines Behälters (2) mit einem Körper (4) und einem Boden (6), der mit einem Umfangssitz (8) versehen ist, der sich im Wesentlichen lotrecht zum Körper (4) ausgehend von einem unteren Ende (7) von diesem erstreckt, wobei dieses Formwerkzeug (12) enthält:
- eine Wand (14) mit einer Innenfläche (15), die die Prägung des Körpers (4) des Behälters (2) bestimmt und einen Hohlraum (17) begrenzt, wobei diese Innenfläche (15) an einem unteren Ende in einer Öffnung (20) endet, wobei die Wand (14) jenseits des Hohlraums (17) eine Vertiefung (21) definiert, die durch die Öffnung (20) in den Hohlraum (17) mündet;
- einen bezüglich der Wand (14) zwischen einer ausgetretenen Stellung, in der der Formwerkzeugboden (16) von der Öffnung (20) entfernt ist, und einer eingezogenen Stellung, in der der Formwerkzeugboden (16) in die Vertiefung (21) eingesetzt ist, beweglichen Formwerkzeugboden (16), wobei der Boden eine obere Fläche (27) aufweist, die eine Sitzfläche (28) für die Prägung des Sitzes (8) des Behälters (2) bildet und die sich lotrecht zur Öffnung (20) erstreckt,
wobei dieses Formwerkzeug **dadurch gekennzeichnet ist, dass**:
- die Wand (14) eine Senkung (24) aufweist, die oben die Vertiefung (21) begrenzt und sich gegenüber der und um die Öffnung (20) im Wesentlichen lotrecht zur Mittelachse (X) erstreckt;
- die obere Fläche (27) des Formwerkzeugbodens (16) eine Umfangsseite (30) definiert, die sich in der Verlängerung der Sitzfläche (28) um diese herum lotrecht zur Senkung (24) erstreckt.

2. Formwerkzeug (12) nach Anspruch 1, **dadurch gekennzeichnet, dass** die Wand (14) des Formwerkzeugs (12) eine Umfangslippe (22) aufweist, die sich innen vorstehend erstreckt und eine Kante (23) aufweist, die die Öffnung (20) definiert.

3. Formwerkzeug (12) nach Anspruch 2, **dadurch gekennzeichnet, dass** die Lippe (22) im Querschnitt einen spitzen Winkel A im Bereich der Kante (23) bildet.

4. Formwerkzeug (12) nach einem der vorhergehenden Ansprüche **dadurch gekennzeichnet, dass** die Vertiefung (21) seitlich von einer Bohrung (25) begrenzt wird, die sich axial in der Verlängerung der Senkung (24) erstreckt.

5. Formwerkzeug (12) nach einem der vorhergehenden Ansprüche, **dadurch gekennzeichnet, dass** in der eingezogenen Stellung des Formwerkzeugbodens (16) ein Zwischenraum zwischen der Senkung (24) und der Umfangsseite (30) bleibt.

6. Formwerkzeug (12) nach einem der vorhergehenden Ansprüche, **dadurch gekennzeichnet, dass** die Vertiefung (21) eine Bohrung (25) aufweist, die sich axial in der Verlängerung der Senkung (24) erstreckt, und der Formwerkzeugboden (16) mit einer Schürze (32) versehen ist, die sich axial auf der der oberen Fläche (27) entgegengesetzten Seite erstreckt, wobei diese Schürze (32) sich in der eingezogenen Stellung des Formwerkzeugbodens (16) in die Bohrung (25) einfügt.

7. Formwerkzeug (12) nach Anspruch 6, **dadurch gekennzeichnet, dass** ein Betriebsspiel zwischen der Schürze (32) und der Bohrung (25) ausgespart ist.

8. Verfahren zur Herstellung eines Behälters (2) ausgehend von einem Rohling (3), **dadurch gekennzeichnet, dass** es die Vorgänge enthält, die darin bestehen:
- den Rohling in ein Formwerkzeug (12) nach einem der vorhergehenden Ansprüche einzuführen, wobei der Formwerkzeugboden (16) in der ausgetretenen Stellung ist,
- den Behälter zu blasen, indem ein Druckgas in den Rohling (3) injiziert wird,
- während des Blasens den Formwerkzeugboden (16) in seine eingezogene Stellung zu verschieben.

## Claims

1. Mould (12) for the manufacture, from a preform (3), of a container (2) having a body (4) and a bottom (6) provided with a peripheral base (8) which extends substantially perpendicular to the body (4) from a lower end (7) thereof, this mould (12) comprising:
- a wall (14) having an internal surface (15) determining the impression of the body (4) of the container (2) and delimiting a cavity (17), this internal surface (15) terminating, at a lower end, in an opening (20), the wall (14) defining, beyond the cavity (17), a recessed reserve (21) opening into the cavity (17) via the opening (20);
- a mould bottom (16) that is mobile with respect to the wall (14) between an "out" position in which the mould bottom (16) is away from the opening (20), and an "in" position in which the mould bottom (16) is fitted into the reserve (21), the bottom having an upper surface (27) defining a seating surface (28) for the impression of the base (8) of the container (2), and which extends plumb with the opening (20),
this mould being **characterized in that**:
- the wall (14) has a counter bore (24) which delimits the recessed reserve (21) at the top and which extends in line with and around the opening (20) substantially perpendicular to the central axis (X);
- the upper surface (27) of the mould bottom (16) defines a peripheral face (30) which extends in the continuation of the seating surface (28) around the latter, plumb with the counter bore (24).

2. Mould (12) according to Claim 1, **characterized in that** the wall (14) of the mould (12) has a peripheral lip (22) which extends internally as a projection and has an edge corner (23) which defines the opening (20).

3. Mould (12) according to Claim 2, **characterized in that** the lip (22) in cross section forms an acute angle A at the edge corner (23).

4. Mould (12) according to any one of the preceding claims, **characterized in that** the reserve (21) is laterally delimited by a bore (25) which extends axially in the continuation of the counter bore (24).

5. Mould (12) according to any one of the preceding claims, **characterized in that** a gap remains between the counter bore (24) and the peripheral face (30) when the mould bottom (16) is in the "in" position.

6. Mould (12) according to any one of the preceding claims, **characterized in that** the reserve (21) has a bore (25) which extends axially in the continuation of the counter bore (24) and the mould bottom (16) is provided with a skirt (32) which extends axially on the opposite side to the upper surface (27), this skirt (32) becoming housed in the bore (25) when the mould bottom (16) is in the "in" position.

7. Mould (12) according to Claim 6, **characterized in that** a functional clearance is left between the skirt (32) and the bore (25).

8. Method for the manufacture of a container (2) from a preform (3), **characterized in that** it involves the operations consisting in:
- introducing the preform into a mould (12) according to one of the preceding claims, the mould bottom (16) being in the "out" position,
- blowing the container by injecting a pressurized gas into the preform (3),
- during the blowing, moving the mould bottom (16) towards its "in" position.
